(19) Europäisches Patentamt
European Patent Office
Office européen des brevets

(11) EP 2 644 270 A1

(12) EUROPEAN PATENT APPLICATION

(43) Date of publication:
02.10.2013 Bulletin 2013/40

(21) Application number: 12162154.4

(22) Date of filing: 29.03.2012

(51) Int Cl.:
*B01J 31/02* (2006.01)
*C08G 18/09* (2006.01)
*C08G 18/22* (2006.01)
*C08G 18/28* (2006.01)
*C08G 18/38* (2006.01)
*C08G 18/48* (2006.01)
*C08G 18/58* (2006.01)
*C08G 18/72* (2006.01)
*C08G 18/76* (2006.01)
*C08G 18/79* (2006.01)
*C08K 5/21* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **HUNTSMAN INTERNATIONAL LLC**
**Salt Lake City, Utah 84108 (US)**

(72) Inventor: **The designation of the inventor has not yet been filed**

(74) Representative: **Van den Broeck, Kristel Alice et al**
**Huntsman (Europe) BVBA**
**Intellectual Property Department**
**Everslaan 45**
**3078 Everberg (BE)**

(54) **Polyisocyanate trimerization catalyst composition**

(57) A trimerization catalyst composition comprising a trimerization catalyst compound selected from one or more organic metal salt, preferably alkali or earth alkali metal salts, and one or more compounds selected from compounds which comprise a carboxamide group having the structure $-CO-NH_2$ and/or from compounds which comprise a group having the structure -CO-NH-CO- is disclosed.

Further a stable polyisocyanate composition comprising the catalyst composition and a process for making the polyisocyanate composition is disclosed.

A curable polyisocyanate composition is obtained comprising the catalyst composition, a polyisocyanate composition, an epoxy resin and optionally a polyol/monool composition and a polyisocyanurate comprising material made by allowing the curable composition to react at elevated temperature and a process for making the polyisocyanurate comprising material.

EP 2 644 270 A1

## Description

FIELD OF INVENTION

The present invention relates to a stable polyisocyanate trimerization catalyst composition, to a polyisocyanate composition comprising the trimerization catalyst composition, to a process for making such compositions, to a curable polyisocyanate composition wherein the stable trimerization catalyst composition according to the present invention is used, to a process for making such curable composition, to a polyisocyanurate comprising material made or obtainable from such curable composition and to a process for making such polyisocyanurate comprising materials.

The present invention is further related to the use of the trimerization catalyst composition according to the present invention for achieving a remarkably long pot-life for a curable polyisocyanate composition, to such curable polyisocyanate compositions, to a process to make such curable polyisocyanate composition, to a polyisocyanurate comprising material made from such curable polyisocyanate composition, and to a process to make such polyisocyanurate comprising material.

The polyisocyanate trimerization catalyst composition according to the present invention is very suitable to make a curable polyisocyanate composition together with epoxy compounds.

BACKGROUND OF THE INVENTION

Recently a curable composition has been proposed which comprises a polyisocyanate, a lithium halide, a urea compound and an epoxy resin; see PCT/EP2010/054492.

WO2010023060 discloses a curable composition and a process for forming a polyisocyanurate by combining an isocyanate-reactive mixture comprising a polyol, an anhydride and a trimerization catalyst with a polyisocyanate. The trimerization catalyst is selected from alkali metal carboxylates, quaternary ammonium carboxylates and mixtures thereof, the carboxylate having 1-12 carbon atoms.

US 4658007 discloses a process for preparing oxazolidone containing polymer using organoantimony iodide catalyst by reacting a polyisocyanate and a polyepoxide.

In US 3517039 acylated urea polyisocyanates are made by reacting an organic diisocyanate with an organic monocarboxylic acid. These polyisocyanates are used in the preparation of polyurethanes, especially when small amounts of branching are desirable.

In US 3970600 stable solutions of isocyanurate-polyisocyanates containing amide and/or acylurea groups have been described. They avoid deposition of fine or coarse crystalline solids in polyisocyanates comprising isocyanurate groups. First a polyisocyanate is reacted with polybasic carboxylic acid to prepare a polyisocyanate with amide and/or - substituted - acylurea groups. Then this polyisocyanate is trimerized to form an isocyanurate-polyisocyanate and this conversion is stopped by adding acid.

In JP 2-110123 an aliphatic diisocyanate is trimerized to prepare polyisocyanates which have an isocyanurate structure using a catalyst and a deactivating agent once the desired degree of conversion has been attained. The deactivating agent has the structure $-CO-NH_2$ or $-SO-NH_2$ and may be urea, methyl urea, 1,1-dimethyl urea, phenyl carbamate, ethylcarbamate or butylcarbamate. Subsequently deactivated catalyst, excess diisocyanate and solvent, if used, are eliminated. By using this deactivating agent the polyisocyanate comprising polyisocyanurate structure shows a lower degree of discolouration.

WO 2008/068198 and US 2010/0022707 disclose a process for preparing an oligomerized polyisocyanate using a catalyst wherein a deactivator is used once the desired conversion has been obtained followed by removal of the polyisocyanate which was not converted. The deactivator may be selected from urea and urea containing compounds, amongst others.

EP 585835 discloses a process for preparing isocyanurate and urethane group containing polyisocyanate mixtures by partially cyclizing diisocyanates in the presence of a trimerization catalyst, deactivating the trimerization catalyst when the desired conversion is achieved, and subsequently reacting the resulting isocyanurate group containing polyisocyanate with hydroxyl compounds and then separating off the monomeric diisocyanate.

Further disclosures related to partially trimerized polyisocyanate compositions using different methods to stop the trimerization are: EP 447093, US 4284730, US 4537961, US 4697014, US 4743627, US 5124370, US 5221743 and US 7553963. None of these disclosures reveal the present invention or point into its direction.

In US 7071353 reaction products of isocyanates and carboxylic acids are disclosed. First amides are formed which then form acylureas by reaction with further isocyanate groups.

Thermally activated PIR catalysis has been disclosed in US 6127308.

Urea and amides have been disclosed as blocking agents in US 5817732.

US 4302351 discloses isocyanurates and acid hydrogen containing blocking agents.

SUMMARY OF THE INVENTION

According to a first aspect of the present invention, a trimerization catalyst composition and a process for making said composition is disclosed.

The trimerization catalyst composition according to the invention comprises:

- a trimerization catalyst compound selected from one or more organic metal salts, preferably alkali or earth alkali metal salts, and
- one or more compounds selected from compounds which comprise a carboxamide group having the structure- CO- $NH_2$ and/or from compounds which comprise a group having the structure- CO- NH- CO- .

Preferably the catalyst composition is such that the number of equivalents of compounds which comprise a group having the structure -CO-NH-CO- is greater than the number of trimerization catalyst equivalents.

Preferably, the catalyst composition is such that the number of equivalents of compounds which comprise a carboxamide group having the structure- CO- $NH_2$ is greater than the number of trimerization catalyst equivalents, preferably greater than 4 times the number of trimerization catalyst equivalents.

Preferably, the trimerization catalyst is an organic metal salt selected from a carboxylate or alkoxide and is preferably selected from one or more of potassium acetate, potassium hexanoate, potassium ethylhexanoate, potassium octanoate, potassium lactate, sodium ethoxide, sodium formate, potassium formate, sodium acetate, potassium benzoate and mixtures thereof

The compound comprising a group having the structure- CO- NH- CO- may be a compound having the structure $R_1$- CO- NH- CO- $R_2$ wherein $R_1$ and $R_2$ each independently from each other are selected from 1) hydrogen (- H), 2)- $NR_3R_4$, 3) hydrocarbyl having 1- 100 carbon atoms and optionally comprising hydroxy, ether, halogen, carboxyl, oxygen, isocyanate and/or amine groups wherein $R_3$ and $R_4$ independently from each other, are selected from hydrogen, hydroxy, halogen and hydrocarbyl groups which hydrocarbyl groups have 1- 20 carbon atoms and optionally comprise hydroxy, ether, halogen, carboxyl, isocyanate and/or amine groups, wherein $R_1$ and $R_2$ may be linked to each other essentially forming a ring structure including the- CO- NH- CO- group, and wherein the hydrocarbyl groups in the compounds corresponding to the formula $R_1$- CO- NH- CO- $R_2$ may be a combination of linear, branched, saturated, unsaturated, cyclic and/or non- cyclic aliphatic, aromatic or araliphatic hydrocarbyls and mixtures of such compounds.

The compound comprising a group having the structure- CO- NH- CO- may be a compound having the structure $R_1$- CO- NH- CO- $R_2$ wherein $R_1$ and $R_2$ together with the- CO- NH- CO- group form a 4 to 12 membered ring structure including the- CO- NH- CO- group.

The compound comprising a group having the structure- CO- NH- CO- may be a compound comprising a- CO- NH- CO- NH- group and may be a reaction product of a compound comprising a carboxamide group having the structure- CO- $NH_2$ and a polyisocyanate compound comprising a reactive NCO group Said compound may correspond to $R_6$- CO- NH- CO- NH- $R_7$ wherein the compound comprising a carboxamide group may corresponds to $NH_2$- CO- $R_6$ wherein $R_6$ is 1) hydrogen (- H), 2)- $NR_8R_9$, 3) hydrocarbyl having 1- 20 carbon atoms and optionally comprising hydroxy, ether, halogen and/or amine groups, or 4)- $R_{10}$- CO- $NH_2$, wherein $R_8$ and $R_9$, independently from each other, are selected from hydrogen, hydroxy, halogen and hydrocarbyl groups which hydrocarbyl groups have 1- 10 carbon atoms and optionally comprise hydroxy, ether, halogen and/or amine groups and wherein $R_{10}$ is a bivalent hydrocarbon radical having up to 8 carbon atoms and mixtures of these carboxamides, and wherein the compound comprising a reactive NCO group corresponds to $R_7$- NCO and wherein $R_7$ is selected from hydrogen and hydrocarbyl groups which hydrocarbyl groups have 1- 20 carbon atoms and optionally comprise hydroxy, ether, halogen, carboxyl, isocyanate and/or amine groups and wherein said hydrocarbyl groups may be a combination of linear, branched, saturated, unsaturated, cyclic and/or non- cyclic aliphatic, aromatic or araliphatic hydrocarbyls and mixtures of such compounds.

The compound comprising a group having the structure- CO- NH- CO- may be a compound comprising a- CO- NH- CO- NH- group and may be a reaction product of a compound comprising a carboxamide group having the structure- CO- $NH_2$ and a polyisocyanate compound comprising a reactive NCO group Said compound may correspond to $R_6$- CO- NH- CO- NH- $R_7$ wherein $R_6$ is selected from 1)- $NR_8R_9$, 2) alkyl having 1- 10 carbon atoms and optionally comprising 1- 3 hydroxy and/or ether groups, 3) phenyl or 4) tolyl wherein $R_8$ and $R_9$, independently from each other, are selected from hydrogen, hydroxy, phenyl, tolyl and alkyl having 1- 6 carbon atoms and optionally comprising an hydroxy and/or an ether and mixtures of such compounds.

According to some embodiments of the present invention, a monool/polyol composition is provided comprising at least one of the compounds of the above catalyst composition. Preferably said polyol/monool composition comprises polyester and/or polyether polyols having an average molecular weight of preferably 32-6000 and an average nominal functionality of preferably 1-8.

According to a second aspect of the present invention, a stable polyisocyanate composition and a process for making said composition is disclosed thereby using the catalyst composition of the invention.

In said stable polyisocyanate composition, the number of equivalents of compounds which comprise a group having the structure -CO-NH-CO- is greater than the number of trimerization catalyst equivalents and the ratio of the number of -CO-NH-CO- groups to the number of isocyanate groups is at most 1, preferably at most 0.01, more preferably at most 0.0015 in said stable polyisocyanate composition.
Said stable polyisocyanate composition may further comprise a polyol/monool composition wherein said polyol/monool composition comprises polyester and/or polyether polyols having an average molecular weight of preferably 32-6000 and an average nominal functionality of preferably 1-8.
Said stable polyisocyanate composition may have an isocyanate value of 10 to 48 % by weight and preferably from 20 to 33 % by weight.
Preferably, the polyisocyanate composition comprises a toluene diisocyanate, a methylene diphenyl diisocyanate or a polyisocyanate composition comprising a methylene diphenyl diisocyanate or a mixture of such polyisocyanate compounds.

Further according to the second aspect of the present invention, a process for making the above stable polyisocyanate composition is disclosed thereby using the catalyst composition of the invention.

The process for making the stable polyisocyanate composition according to the invention preferably comprises combining and mixing the compounds which comprise a carboxamide group having the structure $-CO-NH_2$ and/or the compounds which comprise a group having the structure -CO-NH-CO- group to the trimerization catalyst.

The process for making the stable polyisocyanate composition according to the invention may further comprise combining and mixing a polyol/monool composition which preferably comprises polyester and/or polyether polyols having an average molecular weight of preferably 32-6000 and an average nominal functionality of preferably 1-8, such that the ratio of -CO-NH-CO- groups over the number of isocyanate groups is at most 1, preferably at most 0.01, more preferably at most 0.0015.

Preferably, the process for making the stable polyisocyanate composition according to the invention comprises first or at least simultaneously adding the one or more compounds selected from compounds which comprise a carboxamide group having the structure- CO- NH2 and/or compounds which comprise a group having the structure- CO- NH-CO- to the polyisocyanate composition and then combining the trimerization catalyst.

According to <u>a third aspect</u> of the present invention, a curable composition and a process for making said composition is disclosed. Said curable polyisocyanate composition comprises the compounds of the stable polyisocyanate composition according to the invention and an epoxy resin. Preferably, the number of equivalents of compounds having a -CO-NH-CO- group in the curable polyisocyanate composition is smaller than or equal to the number of epoxy equivalents.

The process for making a curable polyisocyanate composition according to the invention comprises combining and mixing the compounds of the catalyst composition, a polyisocyanate composition which comprises a toluene diisocyanate, a methylene diphenyl diisocyanate or a polyisocyanate composition comprising a methylene diphenyl diisocyanate or a mixture of such polyisocyanates, an epoxy resin, and optionally a polyol/monool composition which preferably comprises polyester and/or polyether polyols having an average molecular weight of preferably 32-6000 and an average nominal functionality of preferably 1-8. Said process comprises first or at least simultaneously adding the one or more compounds selected from compounds which comprise a carboxamide group having the structure $-CO-NH_2$ and/or compounds which comprise a group having the structure -CO-NH-CO- to the polyisocyanate composition and then combining the trimerization catalyst.

According to <u>a fourth aspect</u> of the present invention, a polyisocyanurate comprising material and a process for making said composition is disclosed thereby using the curable composition of the invention.
The polyisocyanurate comprising material according to the invention is made by allowing the above curable composition to react at elevated temperature.

The independent and dependent claims set out particular and preferred features of the invention. Features from the dependent claims may be combined with features of the independent or other dependent claims as appropriate.

The above and other characteristics, features and advantages of the present invention will become apparent from the detailed description and examples set out further.

<u>DEFINITIONS AND TERMS</u>

In the context of the present invention the following terms have the following meaning:

1) The polyisocyanate trimerization catalyst which is selected from organic metal salts, preferably alkali or earth alkali organic metal salts, more preferably metal carboxylates or alkoxides and mixtures thereof, the carboxylate group preferably having 1-12 carbon atoms is in the text referred to as "the trimerization catalyst", "the catalyst compound" or "the catalyst".

2) The compounds which are selected from compounds comprising a carboxamide group having the structure $-CO-NH_2$ and/or compounds which comprise a group having the structure -CO-NH-CO- may also be referred to as "the inhibitor". In case compounds comprising a carboxamide group are used, a compound having a group having the structure -CO-NH-CO- will be formed as a reaction product with a polyisocyanate. The compound having a group having the structure -CO-NH-CO- is then regarded as having inhibiting properties towards the trimerization catalyst.

3) The composition comprising at least one trimerization catalyst compound according to the invention in combination with at least one compound selected from compounds which comprise a carboxamide group having the structure $-CO-NH_2$ and/or compounds which comprise a group having the structure -CO-NH-CO- is in the text referred to as "the trimerization catalyst composition" or "the catalyst composition".

4) The composition comprising the trimerization catalyst composition, a polyisocyanate composition and an epoxy resin is in the text referred to as "the curable composition".

5) The isocyanate index or NCO index or index is the ratio of NCO-groups over isocyanate-reactive hydrogen atoms present in a formulation, given as a percentage :

$$\frac{[NCO] \times 100}{[\text{active hydrogen}]} \quad (\%)$$

In other words the NCO-index expresses the percentage of isocyanate actually used in a formulation with respect to the amount of isocyanate theoretically required for reacting with the amount of isocyanate-reactive hydrogen used in a formulation.
It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of water, if used) present at the actual polymerisation stage are taken into account.

6) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

7) Reaction system: combination of components wherein the polyisocyanates are kept in one or more containers separate from the isocyanate-reactive components.

8) The term "average nominal hydroxyl functionality" (or in short "functionality") is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

9) The word "average" refers to number average unless indicated otherwise.

10) "Liquid" means having a viscosity of less than 10 Pa.s measured according to ASTM D445-11a at 20°C.

11) "Stable catalyst composition" is a composition according to the present invention comprising at least 1) a trimerization catalyst compound according to the invention and 2) compounds which comprise a carboxamide group having the structure $-CO-NH_2$ and/or compounds which comprise a group having the structure -CO-NH-CO- according to the invention and wherein the final concentration of the individual compounds does not change more than 10 % from its initial concentration when kept at room temperature (around 20 °C) and ambient pressure for at least several months.

12) "Stable polyisocyanate composition" is a polyisocyanate composition according to the present invention which does not change more than 10 % from its initial NCO value when kept at room temperature (about 20 to 25 degrees Celsius) and ambient pressure for at least 5 hours and preferably at least 24 hours, the NCO value being determined at ambient conditions. As an example: a polyisocyanate composition having an NCO value of 25 % by weight should have an NCO value within the range 22.5-27.5 % by weight after having been kept at room temperature and ambient pressure for at least 5 hours and preferably at least 24 hours in order to be regarded as stable, both NCO values being determined at ambient conditions. In the context of the present invention, the stable polyisocyanate composition refers to a polyisocyanate composition comprising the above trimerization catalyst composition. In case a polyol or monool composition comprising the compounds of the trimerization catalyst composition is added to a polyisocyanate composition, the formation of a stable polyisocyanate composition refers to a stable polyisocyanate composition comprising polyisocyanate prepolymers as a reaction product of one or more of the polyisocyanate compounds and one or more of the polyol or monool compounds, and the intial NCO refers to the NCO value obtained after formation of the prepolymers.

13) Shelf-life as used herein refers to the stability of a compound or composition comprising a compound in a liquid (e.g. the trimerization catalyst composition according to the invention) when stored under ambient conditions (room temperature and ambient pressure) and is calculated as the period of time the compound or composition retains a viscosity low enough to be used in processing and remains suitable for its intended use.

14) Pot-life as used herein refers to the stability of a liquid reactive composition (e.g. the curable composition according to the invention) when stored under ambient conditions (room temperature and ambient pressure) and is calculated as the period of time the reactive composition remains suitable for its intended processing after mixing with reaction-initiating agents and/or subjecting to reaction-initiating conditions (such as subjecting to an elevated temperature).

15) Trimerization catalyst as used herein refers to a catalyst being able to catalyse (promote) the formation of isocyanurate groups from polyisocyanates.

16) Polyisocyanurate comprising material refers to a polyisocyanate composition comprising more than 10% by weight polyisocyanurate, preferably at least 50% by weight polyisocyanurate, more preferably 75% by weight, calculated on the total weight of the material.

## DETAILED DESCRIPTION

According to the first aspect of the present invention a novel trimerization catalyst composition and a process for making said novel trimerization catalyst composition is provided.

The trimerization catalyst composition of the present invention is a stable composition, which means that the trimerization catalyst of present invention in combination with the compounds which comprise a carboxamide group having the structure $-CO-NH_2$ and/or compounds which comprise a group having the structure -CO-NH-CO gives a stable composition which has a long shelf-life at 20 °C and ambient pressure of at least several months.

The trimerization catalyst composition of the present invention has the further advantage that it may be added to a polyisocyanate composition to give a stable polyisocyanate composition which is liquid at 20 °C and ambient pressure. Said catalyst composition further exhibits a remarkably long shelf-life of up to several months and longer by using the trimerization catalyst composition of the present invention.

Furthermore, the trimerization reaction of a polyisocyanate can be significantly slowed down or delayed by using the curable composition according to the invention. Such a delay or decrease of the reaction rate is particularly desirable when products are to be made according to processes in which e.g. a one- component composition is used which needs a certain degree of stability for a certain period of time during which no or little reaction occurs at ambient conditions in order to allow such compositions to be handled in such processes.

According to an embodiment the compound having a- CO- NH- CO- group may be a compound having an acylurea group having the structure- CO- NH- CO- NH- . Said compound having an acylurea group may be the reaction product of a polyisocyanate and a compound comprising a carboxamide group having the structure- $CO- NH_2$. However the compounds having an acylurea group according to the invention are not limited to reaction products of a compound comprising a carboxamide and a polyisocyanate.

The present invention is further concerned with a process for preparing a stable trimerization catalyst composition which process comprises adding and mixing at least one compound selected from a compound which comprises a carboxamide group having the structure $-CO-NH_2$ and/or a compound which comprise a group having the structure -CO-NH-CO- to a trimerization catalyst according to the invention.

The trimerization catalyst according to the invention is selected from organic metal salts, preferably alkali or earth alkali organic metal salts, more preferably metal carboxylates or alkoxides and mixtures thereof, the carboxylate / alkoxide group preferably having 1-12 carbon atoms but not limited thereto. Also carboxylates having ring structures such as sodium or potassium benzoate are suitable trimerization catalysts. Most preferred examples are potassium acetate, potassium hexanoate, potassium ethylhexanoate, potassium octanoate, potassium lactate, sodium ethoxide, sodium formate, potassium formate, sodium acetate, potassium benzoate and mixtures thereof. Catalysts of this type are commercially available; examples are Catalyst LB (comprising potassium acetate) from Huntsman, Dabco K2097 and Dabco K15 (comprising potassium octanoate) from Air products.

The compound having a -CO-NH-CO- group is an "imide-like" structure comprising 2 carbonyl groups attached to a -NH- group.

The compounds having a- CO- NH- CO- group according to the invention correspond to the formula $R_1$- CO- NH- CO- $R_2$ wherein $R_1$ and $R_2$ each independently from each other are selected from 1) hydrogen (- H), 2)- $NR_3R_4$, 3) hydrocarbyl having 1- 100 carbon atoms and optionally comprising hydroxy, ether, halogen, carboxyl, oxygen, isocyanate and/or amine groups, wherein $R_3$ and $R_4$ independently from each other, are selected from hydrogen, hydroxy, halogen and hydrocarbyl groups which hydrocarbyl groups have 1- 20 carbon atoms and optionally comprise hydroxy, ether, halogen, carboxyl, isocyanate and/or amine groups, wherein $R_1$ and $R_2$ may be linked to each other essentially forming a ring structure including the- CO- NH- CO- group, and wherein the hydrocarbyl groups in the compounds corresponding to the formula $R_1$- CO- NH- CO- $R_2$ may be a combination of linear, branched, saturated, unsaturated, cyclic and/or non-cyclic aliphatic, aromatic or araliphatic hydrocarbyls and mixtures of such compounds.. Preferably the compound having a- CO- NH- CO- group according to the invention has a molecular weight of at most 1500.

In case $R_1$ and $R_2$ are linked to the- CO- NH- CO- group such that a ring structure is formed in the compound $R_1$- CO- NH- CO- $R_2$ then $R_1$ and $R_2$ together with the- CO- NH- CO- group may form a 4 to 12 membered ringstructure (in case of a 4 membered ring structure there is no $R_2$ involved) . Examples of suitable compounds $R_1$- CO- NH- CO- $R_2$ having a ring structure are:

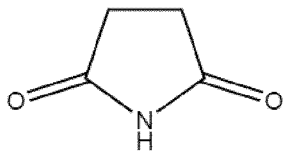

Pyrrolidine-2,5-dione (succinimide) (1)

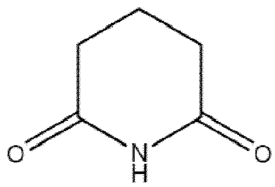

Piperidine-2,6-dione (glutarimide) (2)

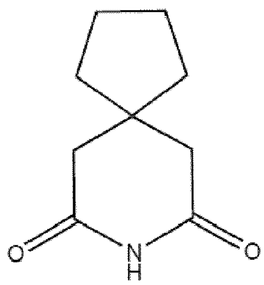

8-azaspiro[4.5]decane-7,9-dione (3)
(Tetramethylene glutarimide)

The ringstructure may comprise 1 or more unsaturations and/or optionally 1 or more aromatic rings and/or optionally rings with heteroatomes. Examples of suitable compounds $R_1$- CO- NH- CO- $R_2$ wherein $R_1$ and $R_2$ together with the- CO- NH- CO- group may form a 4 to 12 membered ring structure and comprise unsaturations, aromatic rings and/or heteroatomes are given below.

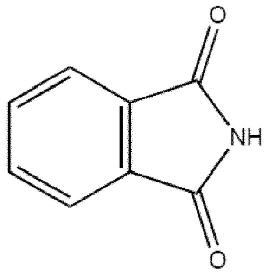

Iso indoline-1,3-dione(Phthalimide) (4)

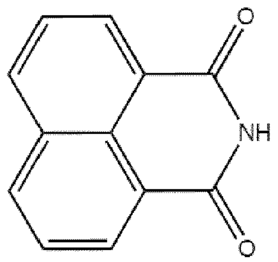

1 *H*-benzo[*de*]isoquinoline-1,3(*2H*)-dione (Naphtalimide) (5)

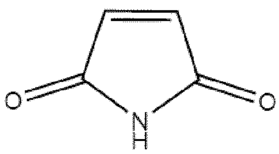

2,5 pyrrole dione (Maleimide) (6)

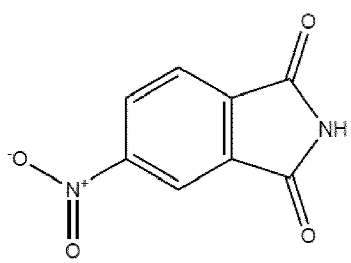

5-nitro isoindoline-1,3-dione (4 nitro phthalimide) (7)

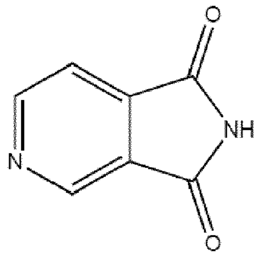

1*H*-pyrrolo[3,4-*c*]pyridine-1,3(2*H*)-dione (8)

(3,4 pyridine dicarboxamide)

According to an embodiment, the compound having a- CO- NH- CO- group may be a compound having an acylurea group having the structure- CO- NH- CO- NH- . Said compound having an acylurea group according to the invention corresponds to the formula $R_6$- CO- NH- CO- NH- $R_7$ and may be the reaction product of a polyisocyanate comprising reactive NCO groups and corresponding to the formula $R_7$- NCO and a compound comprising a carboxamide group having the structure- CO- $NH_2$, and corresponding to the formula $NH_2$- CO- $R_6$. The polyisocyanate compound comprising reactive NCO groups is corresponding to the formula $R_7$- NCO wherein $R_7$ may be selected from hydrogen and hydrocarbyl groups which hydrocarbyl groups have 1- 20 carbon atoms and optionally comprise hydroxy, ether, halogen, carboxyl, isocyanate and/or amine groups and wherein said hydrocarbyl groups may be a combination of linear, branched, saturated, unsaturated, cyclic and/or non- cyclic aliphatic, aromatic or araliphatic hydrocarbyls and mixtures of such compounds.

The compound comprising the carboxamide, which compound may be used to make the compound comprising an acylurea group having the structure- CO- NH- CO- NH- according to the present invention, preferably is selected from a compound according to the formula $NH_2$- CO- $R_6$ wherein $R_6$ is 1) hydrogen (- H), 2)- $NR_8R_9$, 3) hydrocarbyl having 1- 20 carbon atoms and optionally comprising hydroxy, ether, halogen and/or amine groups, or 4)- $R_{10}$- CO- $NH_2$, wherein $R_8$ and $R_9$, independently from each other, are selected from hydrogen, hydroxy, halogen and hydrocarbyl groups which hydrocarbyl groups have 1- 10 carbon atoms and optionally comprise hydroxy, ether, halogen and/or amine groups and wherein $R_{10}$ is a bivalent hydrocarbon radical having up to 8 carbon atoms. Mixtures of these carboxamides may be used as well. Preferably such carboxamides have a molecular weight of at most 499.
The hydrocarbyl groups in these carboxamides may be linear or branched, saturated or unsaturated and cyclic or non-cyclic; they may be aliphatic, aromatic or araliphatic.
More preferred carboxamides are those wherein $R_6$ is 1)- $NR_8R_9$, 2) alkyl having 1- 10 carbon atoms and optionally comprising 1- 3 hydroxy and/or ether groups, 3) phenyl or 4) tolyl, wherein $R_8$ and $R_9$, independently from each other, are selected from hydrogen, hydroxy, phenyl, tolyl and alkyl having 1- 6 carbon atoms and optionally comprising an hydroxy and/or an ether group. Mixtures of such more preferred compounds are also more preferred.

Examples of very useful carboxamides ($NH_2$- CO- $R_6$) are the following ones:

| $R_6$ | Name |
|---|---|
| $-NH_2$ | Carbamide (urea) |
| -NHOH | Hydroxycarbamide (Hydroxy urea) |
| $-NH(CH_3)$ | N-Methyl carbamide (N-Methyl urea) |
| $-N(CH_3)_2$ | 1,1 - dimethyl carbamide (1,1 - dimethyl urea) |
| $-N(C_2H_5)_2$ | 1,1 - diethyl carbamide (1,1 - diethyl urea) |
| $-NH-C_6H_5$ | Phenyl carbamide (Phenyl urea) |
| $-NH-C_6H_4-CH_3$ | Tolylcarbamide (Tolyl urea) |
| -H | Formamide |
| $-CH_3$ | Ethanamide |
| $-C_2H_5$ | Propionamide |
| $-OC_2H_5$ | Ethyl carbamate |

(continued)

| $R_6$ | Name |
|---|---|
| $-OC_4H_9$ | Butyl carbamate |
| $-OC_6H_5$ | Phenyl carbamate |
| $-OCH_2-CH_2OH$ | Hydroxyethyl carbamate |
| $-OCH(CH_3)-CH_2OH$ | Hydroxypropyl carbamate |
| $-CH(CH_3)-OH$ | Lactamide |
| $-C_6H_5$ | Benzamide |
| 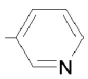 | Nicotinamide |

Most preferably carbamide (urea) is used. It is to be noted that in calculating the number of carboxamide equivalents carbamide (urea) is regarded as containing 2 carboxamide groups.

According to an embodiment, the trimerization catalyst is added and mixed to the inhibitor compound selected from a compound which comprises a carboxamide group having the structure $-CO-NH_2$ and/or a compound which comprise a group having the structure -CO-NH-CO- to form a stable trimerization catalyst composition. Before mixing the trimerization catalyst, it may be convenient to first dissolve the trimerization catalyst and/or inhibitor compound in a solvent, like in an organic solvent like an alcohol, e.g. methanol or ethanol. Subsequently the solvent may be stripped off if desired. Premixing and mixing is conducted under ambient conditions or at elevated temperature, e.g. at 40-100 °C and is done by means of normal stirring.

According to an embodiment, the trimerization catalyst composition according to the invention may be added to a polyol or monool composition. Either the catalyst compounds or the inhibitor compound selected from compounds which comprises a carboxamide group having the structure $-CO-NH_2$ and/or compounds which comprise a group having the structure -CO-NH-CO- alone or in combination may be added to a polyol or monool composition. Preferably said polyol or monool composition comprises polyester and/or polyether polyols or monools having an average molecular weight of 32-6000 and an average nominal functionality of 1-8. Said polyol or monool composition may be added to a polyisocyanate composition and may lead to the formation of a stable polyisocyanate composition according to the second aspect of the invention,. In that case said polyisocyanate composition is further comprising polyisocyanate prepolymers as a reaction product of one or more of the polyisocyanate compounds and one or more of the polyol or monool compounds.

In case the compounds of the trimerization catalyst composition are present in a polyol or monool composition (e.g. needed to dissolve the compounds of the trimerization catalyst composition) and added as such to a polyisocyanate composition in order to achieve a stable polyisocyanate composition, then the weight percentage of polyol calculated on the total weight of the stable polyisocyanate composition comprising the polyol or monool composition is lower than 10%, more preferably lower than 5%, and even more preferably lower than 1%

According to the <u>second aspect</u> of the present invention a stable polyisocyanate composition and a process for preparing said stable polyisocyanate composition which process comprises adding and mixing the above stable trimerization catalyst composition to a polyisocyanate composition is disclosed.

In case the catalyst composition comprises compounds selected from a compound which comprises a carboxamide group having the structure- CO- $NH_2$, a compound comprising a- CO- NH- CO- group and more specifically a compound having an acylurea group having the structure- CO- NH- CO- NH- is formed as a reaction product of a polyisocyanate compound and the compound which comprises a carboxamide group having the structure- CO- $NH_2$. In case the compound is (only) selected from a compound which comprises a carboxamide group having the structure- CO- $NH_2$, then the initial number of carboxamide equivalents is preferably 4 times the number of trimerization catalyst equivalents.

In all cases, the number of equivalents of compounds selected from compounds which comprise a carboxamide group having the structure- CO- $NH_2$ and/or a compounds which comprise a group having the structure- CO- NH- CO added to a polyisocyanate composition is at least greater than the number of trimerization catalyst equivalents added to a polyisocyanate composition in order to form the "stable" polyisocyanate composition according to the invention.

In all cases, the final concentration of the compound comprising a- CO- NH- CO- group in said stable polyisocyanate composition is such that the ratio of- CO- NH- CO- groups over the number of isocyanate groups is at most 1, preferably at most 0.01, more preferably at most 0.0015.

In general, the **polyisocyanate compound(s)** according to the present invention may be selected from aliphatic and, preferably, aromatic polyisocyanates. Preferred aliphatic polyisocyanates are hexamethylene diisocyanate, isophorone diisocyanate, methylene dicyclohexyl diisocyanate and cyclohexane diisocyanate and preferred aromatic polyisocyanates are toluene diisocyanate, naphthalene diisocyanate, tetramethylxylene diisocyanate, phenylene diisocyanate, tolidine diisocyanate and, in particular, methylene diphenyl diisocyanate (MDI) and polyisocyanate compositions comprising methylene diphenyl diisocyanate (like so-called polymeric MDI, crude MDI, uretonimine modified MDI and prepolymers having free isocyanate groups made from MDI and polyisocyanates comprising MDI) and mixtures of such polyisocyanates. MDI and polyisocyanate compositions comprising MDI are most preferred and especially those selected from 1) a diphenylmethane diisocyanate comprising at least 35%, preferably at least 60% by weight of 4,4'-diphenylmethane diisocyanate (4,4' -MDI); 2) a carbodiimide and/or uretonimine modified variant of polyisocyanate 1), the variant having an NCO value of 20% by weight or more; 3) a urethane modified variant of polyisocyanate 1) and/or 2), the variant having an NCO value of 20% by weight or more and being the reaction product of an excess of polyisocyanate 1) and/or 2) and of a polyol having an average nominal hydroxyl functionality of 2-4 and an average molecular weight of at most 1000; 4) a diphenylmethane diisocyanate comprising a homologue comprising 3 or more isocyanate groups; 5) prepolymers having an NCO value of 5-30 % by weight and being the reaction product of any one or more of polyisocyanates 1)-4) and of a polyol having an average nominal hydroxyl functionality of 2-4 and an average molecular weight of more than 1000 and up to 8000; and 6) mixtures of any of the aforementioned polyisocyanates.

Polyisocyanate 1) comprises at least 35% by weight of 4, 4'- MDI. Such polyisocyanates are known in the art and include pure 4, 4'- MDI and isomeric mixtures of 4, 4'- MDI, 2, 4'- MDI and 2, 2'- MDI. It is to be noted that the amount of 2, 2'- MDI in the isomeric mixtures is rather at an impurity level and in general will not exceed 2% by weight, the remainder being 4, 4'- MDI and 2, 4'- MDI. Polyisocyanates as these are known in the art and commercially available; for example Suprasec$^R$ MPR and 1306 ex Huntsman (Suprasec is a trademark of the Huntsman Corporation or an affiliate thereof which has been registered in one or more but not all countries) .

The carbodiimide and/or uretonimine modified variants of the above polyisocyanate 1) are also known in the art and commercially available; e.g. Suprasec$^R$ 2020, ex Huntsman. Urethane modified variants of the above polyisocyanate 1) are also known in the art, see e.g. The ICI Polyurethanes Book by G. Woods 1990, 2nd edition, pages 32- 35. Polyisocyanate 4) is also widely known and commercially available. These polyisocyanates are often called crude MDI or polymeric MDI. Examples are Suprasec$^R$ 2185, Suprasec$^R$ 5025 and Suprasec$^R$ DNR ex Huntsman.

The prepolymers (polyisocyanate 5) ) are also widely known and commercially available. Examples are Suprasec$^R$ 2054 and Suprasec$^R$ 2061, both ex Huntsman.

Mixtures of the aforementioned polyisocyanates may be used as well, see e.g. The ICI Polyurethanes Book by G. Woods 1990, 2nd edition pages 32- 35. An example of such a commercially available polyisocyanate is Suprasec$^R$ 2021 ex Huntsman.

The NCO value of the stable polyisocyanate composition after addition and/or (in-situ) formation of the compound having a -CO-NH-CO- group according to the present invention may range from 10 to 48 % by weight and preferably ranges from 20 to 33 % by weight.

According to an embodiment, the trimerization catalyst composition may be added to a polyisocyanate composition and mixed to obtain the <u>stable polyisocyanates composition</u> according to the invention. The relative amounts of the individual compounds are chosen in such a way that the final polyisocyanate composition used according to the invention is such that the ratio of -CO-NH-CO- groups over the number of isocyanate groups is at most 1, preferably at most 0.01, more preferably at most 0.0015.

Preferably, the addition of the catalyst composition to the isocyanate composition is done stepwise, and eventually under cooling to keep any potential exotherm under control (extends the shelf- life of the obtained stable polyisocyanate composition)

According to an embodiment, in order to form the stable polyisocyanate composition, a compound having a -CO-NH-CO- group is formed in-situ in the polyisocyanate composition by addition of a compound selected from compounds comprising a carboxamide group having the structure $-CO-NH_2$ to the polyisocyanate composition. The trimerization catalyst may be added simultaneously with addition of the compound comprising a carboxamide group or after addition of the compound comprising a carboxamide group in the polyisocyanate composition. In case the trimerization catalyst is added simultaneously with addition of the compound comprising a carboxamide group, then the initial number of equivalents of compounds comprising a carboxamide group having the structure $-CO-NH_2$ is preferably 4 times higher than the number of catalyst compound equivalents.

According to the <u>third aspect</u> of the present invention a curable polyisocyanate composition and a process for preparing said curable polyisocyanate composition is disclosed.

According to an embodiment, the polyisocyanate composition according to the present invention comprising the trimerization catalyst composition is a stable liquid and may be used to improve the pot-life of a curable polyisocyanate composition. Such a curable polyisocyanate composition is obtained by mixing the catalyst composition according to the invention, a polyisocyanate composition according to the invention, an epoxy resin and optionally a polyol or monool.

According to an embodiment, the catalyst composition of the present invention may be first added to a polyol / monool composition. Said polyol / monool composition comprising the catalyst composition of the present invention

may then be added to a polyisocyanate composition to give a stable polyisocyanate composition according to the invention which further comprises polyisocyanate prepolymers (as a reaction product of polyisocyanate and the polyol) and may also be used to improve the pot-life of a curable polyisocyanate composition. Such a curable polyisocyanate composition is obtained by adding an epoxy resin to the stable polyisocyanate composition according to the invention further comprising polyisocyanate prepolymers.

According to an alternative embodiment, the trimerization catalyst of the present invention may be first added to a polyol / monool composition. Said polyol / monool composition comprising the trimerization catalyst of the present invention may then be added to a polyisocyanate composition comprising compounds which comprise a group having the structure -CO-NH-CO- such that a stable polyisocyanate composition is obtained which comprises the catalyst composition according to the invention and further comprises polyisocyanate prepolymers (as a reaction product of polyisocyanate and the polyol). Said obtained polyisocyanate composition may also be used to improve the pot-life of a curable polyisocyanate composition. Such a curable polyisocyanate composition is obtained by further adding an epoxy resin to said polyisocyanate composition.

The invention hence relates to a curable composition comprising the catalyst composition with further addition of a polyisocyanate (composition), an epoxy resin and optionally a polyol or monool.

Surprisingly we have found that the pot-life of the curable composition according to the invention is remarkable and is improved towards a pot-life up to several days by using the trimerization catalyst composition according to the invention, without negatively influencing the curing of the curable composition afterwards.

Preferably the number of equivalents of compounds having a -CO-NH-CO- group in the curable polyisocyanate is smaller or equal than the number of epoxy equivalents added to said curable polyisocyanate composition.

The trimerization catalyst present in the curable polyisocyanate composition according to the present invention is such that the number of equivalents of compounds which comprise a group having the structure -CO-NH-CO- in the curable polyisocyanate composition is at least greater than the number of trimerization catalyst equivalents in the curable polyisocyanate composition.

The epoxy resin used preferably is selected from any epoxy resin which is liquid at 20 °C.

Examples of epoxy resins are:

I) Polyglycidyl and poly (β- methylglycidyl) esters, obtainable by reacting a compound having at least two carboxyl groups in the molecule and, respectively, epichlorohydrin and β- methylepichlorohydrin. The reaction is expediently effected in the presence of bases.
Aliphatic polycarboxylic acids can be used as the compound having at least two carboxyl groups in the molecule. Examples of such polycarboxylic acids are oxalic acid, succinic acid, glutaric acid, adipic acid, pimelic acid, suberic acid, azelaic acid and dimerized or trimerized linoleic acid.
However, cycloaliphatic polycarboxylic acids, such as, for example, tetrahydrophthalic acid, 4- methyltetrahydrophthalic acid, hexahydrophthalic acid or 4- methylhexahydrophthalic acid, may also be used.
Furthermore, aromatic polycarboxylic acids, such as, for example, phthalic acid, isophthalic acid or terephthalic acid, may be used.

II) Polyglycidyl or poly (β- methylglycidyl) ethers, obtainable by reacting a compound having at least two free alcoholic hydroxyl groups and/or phenolic hydroxyl groups with epichlorohydrin or β- methylepichlorohydrin under alkaline conditions or in the presence of an acidic catalyst with subsequent treatment with alkali.
The glycidyl ethers of this type are derived, for example, from acyclic alcohols, for example from ethylene glycol, diethylene glycol or higher poly (oxyethylene) glycols, propane- 1, 2- diol or poly (oxypropylene) glycols, propane- 1, 3- diol, butane- 1, 4- diol, poly (oxytetramethylene) glycols, pentane- 1, 5- diol, hexane- 1, 6- diol, hexane- 2, 4, 6- triol, glycerol, 1, 1, 1- trimethylolpropane, pentaerythritol or sorbitol, and from polyepichlorohydrins. Further glycidyl ethers of this type are derived from cycloaliphatic alcohols, such as 1, 4- cyclohexanedimethanol, bis (4- hydroxycyclohexyl) methane or 2, 2- bis (4- hydroxycyclohexyl) propane, or from alcohols which contain aromatic groups and/or further functional groups, such as N, N- bis (2- hydroxyethyl) aniline or p, p'- bis (2- hydroxyethylamino)-diphenylmethane.
The glycidyl ethers may also be based on mononuclear phenols, such as, for example, p- tert- butylphenol, resorcinol or hydroquinone, or on polynuclear phenols, such as, for example, bis (4- hydroxyphenyl) methane, 4, 4'- dihydroxybiphenyl, bis (4- hydroxyphenyl) sulphone, 1, 1, 2, 2- tetrakis (4- hydroxyphenyl) ethane, 2, 2- bis (4- hydroxyphenyl) propane or 2, 2- bis (3, 5- dibromo- 4- hydroxyphenyl) propane.
Further suitable hydroxy compounds for the preparation of glycidyl ethers are novolaks, obtainable by condensation of aldehydes, such as formaldehyde, acetaldehyde, chloral or furfuraldehyde, with phenols or bisphenols which are unsubstituted or substituted by chlorine atoms or $C_1$- $C_9$- alkyl groups, such as, for example, phenol, 4- chlorophenol, 2- methylphenol or 4- tert- butylphenol.

III) Poly (N- glycidyl) compounds, obtainable by dehydrochlorination of the reaction products of epichlorohydrin with amines which contain at least two amine hydrogen atoms. These amines are, for example, aniline, n- butylamine, bis (4- aminophenyl) methane, m- xylylenediamine or bis (4- methylaminophenyl) methane.
The poly (N- glycidyl) compounds also include triglycidyl isocyanurate, N, N'- diglycidyl derivatives of cycloalkyleneureas, such as ethyleneurea or 1, 3- propyleneurea, and diglycidyl derivatives of hydantoins, such as of 5, 5-dimethylhydantoin.

IV) Poly (S- glycidyl) compounds, for example di- S- glycidyl derivatives, which are derived from dithiols, such as, for example, ethane- 1, 2- dithiol or bis (4- mercaptomethylphenyl) ether.

V) Cycloaliphatic epoxy resins, such as, for example, bis (2, 3- epoxycyclopentyl) ether, 2, 3- epoxycyclopentyl glycidyl ether, 1, 2- bis (2, 3- epoxycyclopentyloxy) ethane or 3, 4- epoxycyclohexylmethyl- 3', 4'- epoxycyclohexanecarboxylate.
It is also possible to use epoxy resins in which the 1, 2- epoxy groups are bonded to different hetero atoms or functional groups; these compounds include, for example, the N, N, O- triglycidyl derivative of 4- aminophenol, the glycidyl ether- glycidyl ester of salicylic acid, N- glycidyl- N'- (2- glycidyloxypropyl)- 5, 5- dimethylhydantoin or 2-glycidyloxy- 1, 3- bis (5, 5- dimethyl- 1- glycidylhydantoin- 3- yl) propane.
Particularly preferred are those mentioned in I and II and most preferred are those mentioned in II.

If an epoxy resin is used which contains hydroxyl groups or other isocyanate-reactive hydrogens then these hydroxyl groups and hydrogens are not taken into account in calculating the index or the number of hydroxyl equivalents.
The curable polyisocyanate composition according to the present invention is made by mixing the ingredients (catalyst composition, polyisocyanate composition, epoxy resin and optionally polyol or monool) under ambient conditions or at elevated temperature, e.g. at 40-70 °C. Preferably, the addition of the ingredients is done stepwise, and eventually under cooling to keep any potential exotherm under control. The relative amounts of the polyisocyanate, the trimerization catalyst and the compound having a CO-NH-CO group are chosen in such a way that the final curable polyisocyanate composition used according to the invention has the relative amounts of isocyanate groups, trimerization catalysts and the compounds having a CO-NH-CO group as has been described before.
Optionally an alcohol, selected from a monool and/or a polyol, preferably selected from polyester and/or polyether polyols may be further added to the curable polyisocyanate composition.
The epoxy resin is added and mixed in such relative amounts that the number of epoxy equivalents is greater or at least equal to the number of compounds having a -CO-NH-CO- group equivalents and under the same conditions as mentioned above.
The curable composition so obtained has a good pot-life under ambient conditions. It is used to make a polyisocyanurate comprising material preferably having a Tg (measured according to ASTM D4065) of at least 120 °C by allowing it to react at elevated temperature, preferably above 50 °C, more preferably above 80 °C and most preferably above 125 °C.
According to the <u>fourth aspect</u> of the present invention, a polyisocyanurate comprising material and a process for preparing said polyisocyanurate comprising material is disclosed.
The polyisocyanurate comprising material according to the invention is made by allowing a curable composition according to the present invention to react at elevated temperature.
According to an embodiment, the invention discloses a polyisocyanurate comprising material obtainable by allowing a curable composition according to the present invention to react at elevated temperature and with a process for making these polyisocyanurate comprising materials by allowing a curable composition according to the present invention to react at elevated temperature. Preferably the reaction is conducted at an index higher than 100, preferably at least 300 (e.g. in range of 300-100000) and most preferably at least 500. Preferably heat is applied in order to bring the curable composition to a temperature above 50 °C and most preferably above 80 °C. Then the curable composition may cure fast (so-called snap-cure) while the temperature increases further (the reaction is exothermic).
The curable compositions according to the present invention may be used in a wide variety of composite processing methods to make a wide variety of composite materials. For example, they may be used to repair an object and in particular a pipe by applying them onto the interior and / or the exterior surface of such an object or such a pipe according to the so-called cured in place method. The curable compositions according to the present invention may be used in resin transfer moulding to produce door panels or honeycomb like structures, in vacuum assisted resin infusion to make structural automotive parts such as car bonnets or chassis rails, in filament winding to produce pressure vessels or gas tanks and in pultrusion to make glass fibre reinforced composite ladders or to produce prepregs used in printed circuit boards, and in sheet and bulk moulding compounding processes. The polyisocyanurate comprising composite materials according to the present invention may further be used in sporting goods, in high volume production of automotive parts, in train parts, aerospace, marine applications, wind power devices, window lineals, structural parts, adhesives, packaging, encapsulants and insulators.

Before curing it, the curable composition may be fed into a mould in order to give it a certain shape or into a cavity of an object in order to provide the object with a polyisocyanurate interior, or onto a surface to provide such a surface with a polyisocyanurate cover, or it may be used to repair an object and in particular a pipe by applying it onto the interior and/or the exterior surface of such an object or such a pipe (examples of such pipe repair have been described in US 4009063, 4366012 and 4622196) or it may be used to bind materials as has been disclosed in WO 2007/096216. Before the curable composition is cured, additives may be added to it or to its constituents. Examples of additives are further non-isocyanate-reactive solvents, polyols and monools, other catalysts, blowing agents, surfactants, water scavengers, like alkylorthoformate and in particular tri-isopropylorthoformate, antimicrobial agents, fire retardants, smoke suppressants, UV-stabilizers, colorants, plasticizers, internal mould release agents, rheology modifiers, wetting agents, dispersing agents and fillers.

The monool and/or polyol optionally used in the present invention preferably has an average nominal hydroxy functionality of 1-8 and an average molecular weight of 32-8000. Mixtures of monools and/or polyols may be used as well.

Examples of such monools are methanol, ethanol, propanol, butanol, phenol, cyclohexanol and hydrocarbon monools having an average molecular weight of 32-5000 like aliphatic and polyether monools. Examples of polyols are ethylene glycol, diethylene glycol, triethylene glycol, propylene glycol, dipropylene glycol, tripropylene glycol, trimethylol propane, sorbitol, sucrose, glycerol, ethanediol, propanediol, butanediol, pentanediol, hexanediol, aromatic and/or aliphatic polyols having more carbon atoms than these compounds and having a molecular weight of up to 8000, polyester polyols having an average molecular weight of 200-8000, polyether polyester polyols having an average molecular weight of 200-8000 and polyether polyols having an average molecular weight of 200-8000. Such monools and polyols are commercially available. Useful examples are Daltocel F555 and Daltocel F442, which are all polyether triols from Huntsman, Voranol P400 and Alcupol R1610, which are polyether polyols from DOW and Repsol, respectively, and Priplast 1838 and 3196 which are high molecular weight polyester polyols from Croda, and Capa 2043 polyol, a linear polyesterdiol of average MW of about 400 from Perstorp, and K-flex polyols 188 and A308 which are polyester polyols from King Industries having a MW of about 500 and 430 respectively, and aromatic polyester polyols like Stepanpol PH56 and BC180 having average molecular weights of about 2000 and 600 respectively, and Neodol 23E which is an aliphatic monool from Shell.

Most preferred are polyester and polyether polyols having an average molecular weight of 32-6000 and an average nominal functionality of 1-8.

The solvent having no isocyanate-reactive groups, which optionally may be used in the present invention, preferably is an organic solvent which is liquid at 20 °C. Solvents having a viscosity at 20°C of 3000 mPa.s or less as measured according to ASTM D445-11a are regarded as liquid solvents. Most preferred are organic, liquid solvents which are able to dissolve more than 1mg of a certain compound comprising the -CO-NH-CO- or carboxamide group per litre of solvent at 20 °C.

Those skilled in the art can easily determine whether or not an organic liquid is suitable for use as solvent in the present invention, certainly with the above guidance. Examples of suitable solvents are esters (such as ethyl acetate, propyl acetate, propylene carbonate, phthalate esters), ketones (such as acetone, methyl ethyl ketone, methyl isobutyl ketone, cyclohexanone), aliphatic hydrocarbons (such as cyclohexane, heptane), chlorinated hydrocarbons (such as chloroform, dichloromethane), aromatic solvents (such as benzene, toluene), ethers (such as dimethyl ether, diethyl ether, dioxane, tetrahydrofuran) and mixtures thereof. Most preferably solvents are selected which have a low boiling point at ambient pressure or under vacuum (then they may be stripped off from the curable composition easily). They should preferably be able to dissolve at least 10g of carboxamide or compound containing the CO-NH-CO group per kg of solvent. The amount of solvent may vary between wide ranges. The lower limit is determined by the desired type and amount of compound comprising the carboxamide or compound containing the CO-NH-CO group and its solubility in the selected solvent. The upper limit is determined by considerations of convenience and cost: the less the better. Preferred amounts range of from 0 to 50 and more preferably of from 0 to 25 and most preferably of from 0 to 10 % by weight on the weight of the epoxy resin composition.

If desired the polyisocyanurate comprising material according to the present invention may be subjected to post-curing.

The invention is illustrated with the following examples.

## EXAMPLES

Chemicals used:

Suprasec 1306 polyisocyanate ex Huntsman: 4, 4'- MDI, in these examples referred to as S1306.

Suprasec 2020 polyisocyanate ex Huntsman : An uretonimine modified polyisocyanate, in these examples indicated as S2020
Suprasec 2185, polymeric polyisocyanate ex Huntsman, in these examples referred to as S2185
Suprasec 3030, mix of 2, 4'- MDI and 4, 4'- MDI , in these examples referred to as S3030 Succinimide ex Sigma Aldrich
Propionamide 97% ex Sigma Aldrich
Carbamide (urea) 99%+ ex Acros Organics
Dabco K2097 ex Air products: solution of potassium acetate in diethylene glycol
Araldite DY-T, ex Huntsman, triglycidylether of trimethylolpropane, indicated herein as DY-T.
Alcupol R1610, ex Repsol glycerol initiated polyoxypropylene polyol with an OH-value of 160 mg KOH/g
Daltocel F526 is a polyoxyethylene triol ex Huntsman, having an average molecular weight about 1300 g/mol
Araldite, Suprasec and Daltocel are trademarks of the Huntsman Corporation or an Affiliate thereof and have been registered in one or more but not all countries.

Preparation of trimerization catalyst compositions:

Example 1:

Example 1 describes the preparation of a trimerization catalyst composition comprising a compound having a -CO-NH-CO- group and a trimerization catalyst according to the invention.

To 246.01 g of Alcupol R1610 kept at RT in a container of appropriate volume, 0.93g of succinimide (9.4 mequivalents- CO- NH- CO- ) and 3.06 of Dabco K2097 (9.35 mmols of potassium acetate) were added. After mixing the blend with a magnetic stirrer for about one hour at 80°C, a clear and homogeneous trimerization catalyst solution was obtained.

Examples 2 and 3 describe the preparation of a trimerization catalyst composition comprising a carboxamide molecule having a $-CO-NH_2$ group.

Example 2:

27.7g of a 5 wt% solution of urea carbamide (0.046 carboxamide equivalent*) in Daltocel F526 were mixed at room temperature with 2.72g of Dabco K2097 (8.32 mmols of potassium acetate) and 219.6g of Alcupol R1610. After 15 min of stirring, a clear and homogeneous trimerization catalyst solution was obtained.

*Urea carbamide being considered as a difunctional molecule

Example 3:

3.42g of propionamide 97% (46.7 mequivalent carboxamides) were added to 3.06g of Dabco K2097 (9.35 mmols of potassium acetate) and 243.5 of Alcupol R1610. After mixing the blend with a magnetic stirrer for about one hour at 80°C, a clear and homogeneous trimerization catalyst solution was obtained.

Examples 4 and 5 describe the preparation of a compound comprising a- CO- NH- CO- group, as a reaction product of an isocyanate with a carboxamide molecule comprising a- $CONH_2$ group.

Example 4:

68.9 pbw of Suprasec 3030 (0.55 isocyanate equivalent) and 81.1 pbw of Suprasec 1306 (0.65 isocyanate equivalent) kept under stirring at 50°C, were mixed with 30 pbw of Suprasec 2185 (0.22 isocyanate equivalent) and 20 pbw of Suprasec 2020 (0.14 isocyanate equivalent).
To that blend, 50 pbw of a solution containing 5 wt% of urea carbamide (0.083 carboxamide equivalent) in Daltocel F526 were added dropwise, under stirring and nitrogen atmosphere. After 30 minutes of reaction, a clear liquid reaction product was obtained comprising the compound having an acylurea group.

(*)Urea carbamide being considered as a difunctional molecule

Example 5:

To 245 pbw of Suprasec 2185 kept at room temperature (1.81 isocyanate equivalent), 5 pbw of propionamide at 97% (0.068 carboxamide equivalent) were added. After about 90 min of reaction at 80°C, under stirring and nitrogen atmosphere, a clear liquid reaction product was obtained comprising the compound having a -CO-NH-CO- group.

Examples 6 to 8 describe the preparation of stable polyisocyanate compositions according to the invention

Examples 6 to 8:

The appropriate amount of the trimerization catalyst compositions of examples 1 to 3 was added dropwise and at room temperature to a polyisocyanate composition kept under stirring, in order to prepare the stable polyisocyanate composition according to the invention.

Example 9 to 12 describe the preparation of a stable polyisocyanate composition comprising a compound having a -CO-NH-CO- group whereby said compound having a -CO-NH-CO- group is produced beforehand in a polyisocyanate composition as a reaction product of an isocyanate with a carboxamide molecule comprising a $-CONH_2$ group as described in examples 4 and 5

Example 9:

To a blend of 28.8 pbw of Suprasec S3030, 33.9 pbw of Suprasec S1306, 12.6 pbw of S2185 and 8.4 pbw of S2020, 1.35 pbw of the blend of example 4 containing a compound comprising a -CO-NH-CO- group was added and mixed for one minute for homogenization.
To that blend, 15 pbw of a solution at 0.61 wt% Dabco K2097 in Alcupol R1610 were added dropwise at room temperature and under stirring, to prepare a stable polyisocyanate composition.

Example 10:

To a blend of 28.4 pbw of Suprasec S3030, 33.4 pbw of Suprasec S1306, 12.4 pbw of S2185 and 8.2 pbw of S2020, 2.7 pbw of the blend of example 4 containing a compound comprising a -CO-NH-CO- group were added and mixed for one minute for homogenization.
To that blend, 15 pbw of a solution at 1.22 wt% Dabco K2097 in Alcupol R1610 were added dropwise at room temperature and under stirring, to prepare a stable polyisocyanate composition.

Example 11:

3.1 pbw of the blend of example 5 containing a compound comprising a- CO- NH- CO- group were mixed at room temperature with 81.9 pbw of Suprasec 2020. To that blend, 15 pbw of a solution at 1.22 wt% Dabco K2097 in Alcupol R1610 were afterwards added dropwise at room temperature and under stirring to prepare a stable polyisocyanate composition.

Example 12:

12.4 pbw of the blend of example 5 containing a compound comprising a- CO- NH- CO- group were mixed at room temperature with 72.6 pbw of Suprasec 2020. To that blend, 15 pbw of a solution at 2.44 wt% Dabco K2097 in Alcupol R1610 were afterwards added dropwise at room temperature and under stirring to prepare a stable polyisocyanate composition.

Table 1

| Stable polyisocyanate compositions | Isocyanate kind (s) / amount in pbw | Catalyst composition / amount in pbw / Inhibitor kind | Catalyst / mequivalents | Equivalent ratio Catalyst/-CO-NH-CO- | Equivalent ratio -CO-NH-CO- / isocyanate |
|---|---|---|---|---|---|
| 6 | S2020 / 85 | Example 1 / 15 / Succinimide | Kacetate / 0 56 | 0 99 | 0 0009 |
| 7 | S2020 / 85 | Example 2 / 15 / Urea carbamide | Kacetate / 0 51 | 0 18 | 00047 |
| 8 | S2020 / 85 | Example 3 / 15 / Propionamide | Kacetate / 0 56 | 0 20 | 00047 |
| 9 | S3030 / 28 8<br>S1306 / 33 9<br>S2185 /12 6<br>S2020 / 8 4 | Example 4 / 1 35 / Acyl urea | Kacetate / 0 28 | 0 62 | 0 0007 |

(continued)

| Stable polyisocyanate compositions | Isocyanate kind (s) / amount in pbw | Catalyst composition / amount in pbw / Inhibitor kind | Catalyst / mequivalents | Equivalent ratio Catalyst/-CO-NH-CO- | Equivalent ratio -CO-NH-CO- / isocyanate |
|---|---|---|---|---|---|
| 10 | S3030 / 28 4<br>S1306 / 33 4<br>S2185 /12 4<br>S2020 / 8 2 | Example 4 / 2 7 / Acyl urea | Kacetate / 0 56 | 0 62 | 0 0014 |
| 11 | S2020 / 81 9 | Example 5 / 3 1 / -NH-CO-NH-derivative | Kacetate / 0 56 | 0 67 | 0 0014 |
| 12 | S2020 / 72 6 | Example 5 / 12 4 / -NH-CO-NH-derivative | Kacetate / 1 12 | 0 33 | 0 0056 |

Examples 13 to 20: Preparation of curable compositions and polyisocyanurate comprising materials according to the present invention.

The required amount of epoxy resin was added at room temperature to the stable polyisocyanate compositions of examples 6 to 12, and stirred for about one minute in order to prepare the curable isocyanate compositions of Table 2.

30 g of these curable compositions were allowed to cure in a 4 mm thick tin open mould for one or two hour(s) at 125°C or 150°C, so as to prepare polyisocyanurate comprising materials according to the present invention.

For the sake of these examples the pot-lives of these resins were estimated with a Brookfield RDV-III Ultra, on 12 mL samples, as the time at which the resin viscosity reached values higher than 10 Pa. s.

The glass transition temperature (Tg) from the obtained materials was determined by Differential Mechanical Thermo Analysis (DMTA) on a TA Q800 apparatus with a heating rate of 3°C/min and a frequency of 1 Hz (measured according to ASTM D 4065). The Tg was defined as the first inflection point on the E' (storage modulus) curve determinated by the TA Universal analysis software.

The ingredients used, the amounts in parts by weight, the pot- lives, Tg of the cured materials, and the equivalent ratio of epoxy group per molecule having a- CO- NH- CO- group, are given in Table 2.

Table 2

| Examples of curable compositions | Compositions from Table 1 / amount in pbw | Epoxy kind / amount in pbw | Equivalent ratio Epoxy /-CO-NH-CO- | Pot-life of the curable compositions (hours) | Curing conditions | Tg (E') cured material (°C) |
|---|---|---|---|---|---|---|
| 13 | 6/100 | DY-T / 10 | 142 6 | 9 | 2h at 150°C | 163 1 |
| 14 | 7 / 100 | DY-T / 10 | 28 6 | > 140 | 1h at 125°C | 157 2 |
| 15 | 8 / 100 | DY-T / 10 | 28 5 | > 60 (1) | 2h at 150°C | 168 4 |
| 16 | 9 / 100 | DY-T / 6 | 106 7 | > 35 | 1h at 125°C | 169 1 |
| 17 | 10 / 100 | DY-T / 10 | 88 9 | > 45 | 1h at 150°C | 155 7 |
| 18 | 11 / 100 | DY-T / 6 | 57 0 | > 25 | 1h at 150°C | 187 1 |
| 19 | 12 / 100 | DY-T / 6 | 14 3 | > 40 | 1h at 150°C | 275 0 |
| (1) Addition of the catalyst composition to the polyisocyanate done under cooling | | | | | | |

## Claims

**1.** A trimerization catalyst composition comprising:

- a trimerization catalyst compound selected from one or more organic metal salts, preferably alkali or earth alkali metal salts, and
- one or more compounds selected from compounds which comprise a carboxamide group having the structure- CO- $NH_2$ and/or from compounds which comprise a group having the structure- CO- NH- CO- .

2. Catalyst composition according to claim 1 wherein the number of equivalents of compounds which comprise a group having the structure -CO-NH-CO- is greater than the number of trimerization catalyst equivalents.

3. Catalyst composition according to claim 1 wherein the number of equivalents of compounds which comprise a carboxamide group having the structure -CO-$NH_2$ is greater than the number of trimerization catalyst equivalents, preferably greater than 4 times the number of trimerization catalyst equivalents.

4. Catalyst composition according to any of claim 1-3 wherein the organic metal salt is a carboxylate or alkoxide and is preferably selected from one or more of potassium acetate, potassium hexanoate, potassium ethylhexanoate, potassium octanoate, potassium lactate, sodium ethoxide, sodium formate, potassium formate, sodium acetate, potassium benzoate and mixtures thereof

5. Catalyst composition according to any of claim 1- 4 wherein the compound comprising a group having the structure- CO- NH- CO- comprises the structure $R_1$- CO- NH- CO- $R_2$ wherein $R_1$ and $R_2$ each independently from each other are selected from 1) hydrogen (- H), 2)- $NR_3R_4$, 3) hydrocarbyl having 1- 100 carbon atoms and optionally comprising hydroxy, ether, halogen, carboxyl, oxygen, isocyanate and/or amine groups wherein $R_3$ and $R_4$ independently from each other, are selected from hydrogen, hydroxy, halogen and hydrocarbyl groups which hydrocarbyl groups have 1- 20 carbon atoms and optionally comprise hydroxy, ether, halogen, carboxyl, isocyanate and/or amine groups, wherein $R_1$ and $R_2$ may be linked to each other essentially forming a ring structure including the- CO- NH- CO- group, and wherein the hydrocarbyl groups in the compounds corresponding to the formula $R_1$- CO- NH- CO- $R_2$ may be a combination of linear, branched, saturated, unsaturated, cyclic and/or non- cyclic aliphatic, aromatic or araliphatic hydrocarbyls and mixtures of such compounds.

6. Catalyst composition according to any of claim 1- 5 wherein the compound comprising a group having the structure- CO- NH- CO- comprises the structure $R_1$- CO- NH- CO- $R_2$ wherein $R_1$ and $R_2$ together with the- CO- NH- CO- group form a 4 to 12 membered ring structure including the- CO- NH- CO- group.

7. Catalyst composition according to any of claim 1- 6 wherein the compound comprising the- CO- NH- CO- group corresponds to a compound comprising a- CO- NH- CO- NH- group and is a reaction product of a compound comprising a carboxamide group having the structure- CO- $NH_2$ and a polyisocyanate compound comprising a reactive NCO group.

8. Catalyst composition according to claim 7 wherein the compound comprising a- CO- NH- CO- NH- group corresponds to $R_6$- CO- NH- CO- NH- $R_7$ and wherein

   - the compound comprising a carboxamide group corresponds to $NH_2$- CO- $R_6$ and wherein $R_6$ is 1) hydrogen (- H), 2)- $NR_8R_9$, 3) hydrocarbyl having 1- 20 carbon atoms and optionally comprising hydroxy, ether, halogen and/or amine groups, or 4)- $R_{10}$- CO- $NH_2$, wherein $R_8$ and $R_9$, independently from each other, are selected from hydrogen, hydroxy, halogen and hydrocarbyl groups which hydrocarbyl groups have 1- 10 carbon atoms and optionally comprise hydroxy, ether, halogen and/or amine groups and wherein $R_{10}$ is a bivalent hydrocarbon radical having up to 8 carbon atoms and mixtures of these carboxamides, and
   - the compound comprising a reactive NCO group corresponds to $R_7$-NCO and wherein $R_7$ is selected from hydrogen and hydrocarbyl groups which hydrocarbyl groups have 1-20 carbon atoms and optionally comprise hydroxy, ether, halogen, carboxyl, isocyanate and/or amine groups and wherein said hydrocarbyl groups may be a combination of linear, branched, saturated, unsaturated, cyclic and/or non-cyclic aliphatic, aromatic or araliphatic hydrocarbyls and mixtures of such compounds.

9. Catalyst composition according to claim 8 wherein $R_6$ is selected from 1) -$NR_8R_9$, 2) alkyl having 1-10 carbon atoms and optionally comprising 1-3 hydroxy and/or ether groups, 3) phenyl or 4) tolyl wherein $R_8$ and $R_9$, independently from each other, are selected from hydrogen, hydroxy, phenyl, tolyl and alkyl having 1-6 carbon atoms and optionally comprising an hydroxy and/or an ether and mixtures of such compounds.

10. A monool or polyol composition comprising at least one of the compounds of the catalyst composition according to

any of claims 1-9 and wherein the polyol/monool composition preferably comprises polyester and/or polyether polyols having an average molecular weight of preferably 32-6000 and an average nominal functionality of preferably 1-8.

**11.** Stable polyisocyanate composition comprising the catalyst composition according to any of claims 1-9 and a polyisocyanate composition in such an amount that the number of equivalents of compounds which comprise a group having the structure -CO-NH-CO- is greater than the number of trimerization catalyst equivalents and the ratio of the number of -CO-NH-CO- groups to the number of isocyanate groups is at most 1, preferably at most 0.01, more preferably at most 0.0015.

**12.** Polyisocyanate composition according to claim 11 further comprising a polyol/monool composition wherein said polyol/monool composition comprises polyester and/or polyether polyols having an average molecular weight of preferably 32-6000 and an average nominal functionality of preferably 1-8.

**13.** Polyisocyanate composition according to any of claims 11-12, the composition having an isocyanate value of 10 to 48 % by weight and preferably from 20 to 33 % by weight.

**14.** Polyisocyanate composition according to any of claims 11-13, wherein the polyisocyanate composition comprises a toluene diisocyanate, a methylene diphenyl diisocyanate or a polyisocyanate composition comprising a methylene diphenyl diisocyanate or a mixture of such polyisocyanate compounds.

**15.** Process for making a composition according to any of claims 1-9 which process comprises combining and mixing the compounds which comprise a carboxamide group having the structure $-CO-NH_2$ and/or the compounds which comprise a group having the structure -CO-NH-CO- group to the trimerization catalyst.

**16.** Process for making a composition according to any of claims 11-14 which process comprises combining and mixing the compounds of the catalyst composition according to any of claims 1-9 and one or more polyisocyanate compounds and optionally a polyol/monool composition which preferably comprises polyester and/or polyether polyols having an average molecular weight of preferably 32-6000 and an average nominal functionality of preferably 1-8, such that the ratio of -CO-NH-CO- groups over the number of isocyanate groups is at most 1, preferably at most 0.01, more preferably at most 0.0015 and a stable polyisocyanate composition is formed.

**17.** Process according to claim 16 which process comprises first or at least simultaneously adding the one or more compounds selected from compounds which comprise a carboxamide group having the structure $-CO-NH_2$ and/or compounds which comprise a group having the structure -CO-NH-CO- and then combining the trimerization catalyst to the polyisocyanate composition.

**18.** Curable polyisocyanate composition comprising the compounds of the stable polyisocyanate composition according to any of claims 11-14, and an epoxy resin wherein the number of equivalents of compounds having a -CO-NH-CO- group in the curable polyisocyanate composition is smaller than or equal to the number of epoxy equivalents.

**19.** Use of a catalyst composition according to claims 1-9 for improving the pot-life of a curable polyisocyanate composition.

**20.** Process for making a curable polyisocyanate composition according to claim 18, by combining and mixing

- the compounds according to the catalyst composition of claims 1-9, and
- a polyisocyanate composition which comprises a toluene diisocyanate, a methylene diphenyl diisocyanate or a polyisocyanate composition comprising a methylene diphenyl diisocyanate or a mixture of such polyisocyanates, and
- an epoxy resin, and
- optionally a polyol/monool composition which preferably comprises polyester and/or polyether polyols having an average molecular weight of preferably 32-6000 and an average nominal functionality of preferably 1-8.

which process comprises first or at least simultaneously adding the one or more compounds selected from compounds which comprise a carboxamide group having the structure $-CO-NH_2$ and/or compounds which comprise a group having the structure -CO-NH-CO- and then combining the trimerization catalyst to the polyisocyanate composition.

**21.** Polyisocyanurate comprising material made by allowing a curable composition according to claim 18 to react at

elevated temperature.

**22.** Polyisocyanurate comprising material obtainable by allowing a curable composition according to claim 18 to react at elevated temperature.

**23.** Process for making a polyisocyanurate comprising material according to claim 21-22 by allowing the curable composition according to claim 18 to react at elevated temperature.

Europäisches Patentamt
European Patent Office
Office européen des brevets

# EUROPEAN SEARCH REPORT

Application Number
EP 12 16 2154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br><br>A | EP 1 238 993 A1 (BAYER AG [DE] BAYER MATERIALSCIENCE AG [DE]) 11 September 2002 (2002-09-11)<br>* paragraphs [0001], [0003], [0014] - [0019]; example 2 * | 1-9,11, 15<br><br>10, 12-14, 16-23 | INV.<br>B01J31/02<br>C08G18/09<br>C08G18/22<br>C08G18/28<br>C08G18/38<br>C08G18/48<br>C08G18/58<br>C08G18/72<br>C08G18/76<br>C08G18/79<br>C08K5/21 |
| X | WO 2008/060454 A2 (BAYER MATERIALSCIENCE LLC [US]; ADKINS RICK L [US]; SLACK WILLIAM E [U) 22 May 2008 (2008-05-22)<br>* page 1, lines 8-11 *<br>* page 2, lines 8-10 *<br>* page 2, line 20 - page 3, line 5 *<br>* page 9, line 24 - page 10, line 24; examples * | 1-23 | |
| A,D | WO 2010/121898 A1 (HUNTSMAN INT LLC [US]; DEBIEN CHRISTIAAN [BE]; ESBELIN CHRISTIAN [BE];) 28 October 2010 (2010-10-28)<br>* page 1, lines 3-7, 18-28 *<br>* page 2, lines 5-9; examples * | 1-23 | |
| | | | TECHNICAL FIELDS SEARCHED (IPC) |
| | | | B01J<br>C08G<br>C08K |

The present search report has been drawn up for all claims

| Place of search | Date of completion of the search | Examiner |
|---|---|---|
| Munich | 21 September 2012 | Eigner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

## ANNEX TO THE EUROPEAN SEARCH REPORT ON EUROPEAN PATENT APPLICATION NO. EP 12 16 2154

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2012

| Patent document cited in search report | Publication date | Patent family member(s) | Publication date |
|---|---|---|---|
| EP 1238993 A1 | 11-09-2002 | AT 310759 T | 15-12-2005 |
| | | CA 2373887 A1 | 05-09-2002 |
| | | CN 1374294 A | 16-10-2002 |
| | | DE 10110437 A1 | 19-09-2002 |
| | | DE 50204983 D1 | 29-12-2005 |
| | | EP 1238993 A1 | 11-09-2002 |
| | | ES 2252329 T3 | 16-05-2006 |
| | | HK 1050189 A1 | 28-11-2008 |
| | | JP 4443090 B2 | 31-03-2010 |
| | | JP 2003002873 A | 08-01-2003 |
| | | KR 20020071469 A | 12-09-2002 |
| | | US 2002123596 A1 | 05-09-2002 |
| WO 2008060454 A2 | 22-05-2008 | US 2008139777 A1 | 12-06-2008 |
| | | WO 2008060454 A2 | 22-05-2008 |
| WO 2010121898 A1 | 28-10-2010 | CA 2755856 A1 | 28-10-2010 |
| | | CN 102405244 A | 04-04-2012 |
| | | EP 2421906 A1 | 29-02-2012 |
| | | KR 20120017023 A | 27-02-2012 |
| | | US 2012046436 A1 | 23-02-2012 |
| | | WO 2010121898 A1 | 28-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2010054492 W
- WO 2010023060 A
- US 4658007 A
- US 3517039 A
- US 3970600 A
- JP 2110123 A
- WO 2008068198 A
- US 20100022707 A
- EP 585835 A
- EP 447093 A
- US 4284730 A
- US 4537961 A
- US 4697014 A
- US 4743627 A
- US 5124370 A
- US 5221743 A
- US 7553963 B
- US 7071353 B
- US 6127308 A
- US 5817732 A
- US 4302351 A
- US 4009063 A
- US 4366012 A
- US 4622196 A
- WO 2007096216 A

### Non-patent literature cited in the description

- **G. WOODS.** The ICI Polyurethanes Book. 1990, 32-35